# EUROPEAN PATENT APPLICATION

(11) **EP 3 293 719 A1**
(43) Date of publication of application: **14.03.2018**
(21) Application number: 15891328.5
(22) Date of filing: 26.10.2015
(51) Int. Cl.: G09B 1/16, A63F 3/00

(54) **CREATIVE FIGURE BOARD GAME LEARNING-BY-PLAYING TOOL, SYSTEM, AND METHOD**

(30) Priority: 06.05.2015 KR 20150063035
(71) Applicant: Moon, Tae-Won, Seoul 03001 (KR)
(72) Inventor: Moon, Tae-Won, Seoul 03001 (KR)
(74) Representative: Verriest, Philippe
(86) International application number: PCT/KR2015/011327
(87) International publication number: WO 2016/178464

(57) **Abstract**

A creative figure board game play and learning kit according to an exemplary embodiment of the present invention includes: a board game plate on which a plurality of unit figures having predetermined shapes is disposed at predetermined intervals to define a main set of figures; and shape piece blocks which are disposed on the board game plate by being rotated, moved, symmetric, and reversed along an outer circumferential portion of at least one of the unit figures, and connected to one another to define a sub-set of figures that divides a part of the main set of figures, in which the shape piece blocks have a single transformable shape piece block which is transformable to correspond to shapes of the remaining shape piece blocks.

## Description

### [Technical Field]

The present invention relates to a creative board game play and learning kit and a play and learning method using the same, and more particularly, a creative figure board game play and learning kit and a play and learning method using the same, which are capable of helping users better understand figures, capable of increasing thinking faculties and creativity, and capable of enabling 2 to 4 persons to simply and interestingly play the game in a short time, by allowing the user to fit together figure blocks provided to make a unit figure having a predetermined shape and allow the user to dispose the figure blocks to make an even larger figure or more unit figures.

### [Background Art]

In general, researches are being widely conducted on play and learning kits that enable users to learn mathematics knowledge while simply playing a game.

In particular, recently, a lot of play and learning kits using figures are particularly manufactured to enable users to learn spaces and figures while playing with the play and learning kits and to help the users better understand the spaces or the figures even though the users are very young.

However, most of the play and learning kits using figures are figure guess game kits intended to improve a child's space perception and dexterity by allowing the child to fit together any one figure, among figures having various shapes, with an already disposed figure but without a vacant space in order to help the child understand figures.

Thus, the child becomes bored with the simple game when the child plays the game several times, and often loses interest in the game because the child mostly plays the game alone without parents, teachers, or caregivers.

To solve the aforementioned problems, a board game or the like is being developed in the form of a play and learning kit in order to allow 2 to 4 persons to play the play and learning kit together.

However, there are problems in that most of the board games are configured based on popular contents such as animations so that the users need to know the contents to play the board games, the board games are complicated and has a limitation in allowing the users to have an interest in the board game regardless of ages, game methods are complicated, difficult, simple, or iterative, and parents or teachers do not like to play the game together because a large amount of time is required to complete the game.

### [DISCLOSURE]

### [Technical Problem]

The present invention has been made in an effort to provide a creative figure board game play and learning kit and a play and learning method using the same, in which figure blocks, which are provided to make at least one unit figure having a predetermined shape, are fitted together by being rotated or reversed, and shape piece blocks are disposed to provide a larger number of unit figures by further increasing a set of figures, thereby helping users better understand figures, improving thinking faculty and creativity, and enabling 2 to 4 persons to simply and interestingly play the game in a short time.

### [Technical Solution]

An exemplary embodiment of the present invention provides a creative figure board game play and learning kit including: a board game plate on which a plurality of unit figures having predetermined shapes is disposed at predetermined intervals to define a main set of figures; and shape piece blocks which are disposed on the board game plate by being rotated, moved, symmetric, and reversed along an outer circumferential portion of at least one of the unit figures, and connected to one another to define a sub-set of figures that divides a part of the main set of figures, in which the shape piece blocks have a single transformable shape piece block which is transformable to correspond to shapes of the remaining shape piece blocks.

### [Advantageous Effects]

According to the exemplary embodiment of the present invention, it is possible to provide a creative figure board game play and learning kit and a play and learning method using the same, in which figure blocks, which are provided to make at least one unit figure having a predetermined shape, are fitted together by being rotated or reversed, and shape piece blocks are disposed to provide a larger number of unit figures by further increasing a set of figures, thereby helping users better understand figures, improving thinking faculty and creativity, and enabling 2 to 4 persons to simply and interestingly play the game in a short time.

Meanwhile, according to the exemplary embodiment of the present invention, it is possible to provide a creative figure board game play and learning kit and a play and learning method using the same, which are capable of serving as complementary goods by providing a board game which is analogue and family-oriented in comparison with on-line games or mobile games that strongly stimulate sensory organs, have speculative properties, and cause social problems such as game addiction or the like.

According to the exemplary embodiment of the present invention, it is possible to provide a creative figure game combined with a strategic board game instead of a puzzle type game in which figures are simply fitted together, to enable the entire family to enjoy the figure game, not an infant or a child alone, to provide an opportunity to turn around the game by using the transformable shape piece blocks, and to provide educational games which allow users to interestingly play the game and are combined with mathematical concepts so as to increase the number of unit figures in the sub-set of figures made by disposing the non-transformable shape piece blocks while changing the directions or the positions of the non-transformable shape piece blocks in the front, rear, left, and right directions.

According to the exemplary embodiment of the present invention, it is possible to improve creativity because the game is played in a new way each time the game is played.

According to the exemplary embodiment of the present invention, it is possible to easily manage the game as a mobile game because the non-transformable shape piece block or the transformable shape piece block may be expressed by a simple hand movement.

### [Description of the Drawings]

FIGS. 1 to 3 are views illustrating a board game plate of a creative figure board game play and learning kit according to an exemplary embodiment of the present invention.
FIG. 4 is a view illustrating shape piece blocks disposed on the board game plate in FIG. 1 by being rotated, moved, and reversed.
FIG. 5 is a view of shape piece block cards on which the shape piece blocks illustrated in FIG. 4 are marked.
FIG. 6 is a view illustrating game chips used for the creative figure board game play and learning kit according to the exemplary embodiment of the present invention.
FIGS. 7 to 9 are views of a creative figure board game play and learning kit according to another exemplary embodiment of the present invention, which illustrate the board game plate, illustrate the shape piece blocks disposed on the board game plate in FIG. 7 by being rotated, moved, and reversed, and illustrate the shape piece block cards on which the shape piece blocks illustrated in FIG. 8 are marked.
FIG. 10 is a flowchart illustrating a play and learning method using the creative figure board game play and learning kit according to the exemplary embodiment of the present invention.
FIG. 11 is a flowchart illustrating a play and learning method using the creative figure board game play and learning kit according to another exemplary embodiment of the present invention.
FIGS. 12 to 14 are views for explaining a play and learning method using the creative figure board game play and learning kit according to the exemplary embodiment of the present invention.
FIG. 15 is a view illustrating a shape piece block organizing lid of a creative figure board game play and learning kit according to another exemplary embodiment of the present invention.
FIGS. 16 and 17 are block diagrams for explaining a creative figure board game play and learning system according to still another exemplary embodiment of the present invention.
FIG. 18 is an exemplified view illustrating a screen of the creative figure board game play and learning system according to yet another exemplary embodiment of the present invention.

### [Mode for Invention]

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Unless explicitly described to the contrary throughout the specification, the word "comprise" and variations such as "comprises" or "comprising", will be understood to imply the inclusion of stated elements but not the exclusion of any other elements. In addition, the terms "-er", "-or" and "module" described in the specification mean units for processing at least one function and operation and can be implemented by hardware components or software components and combinations thereof.

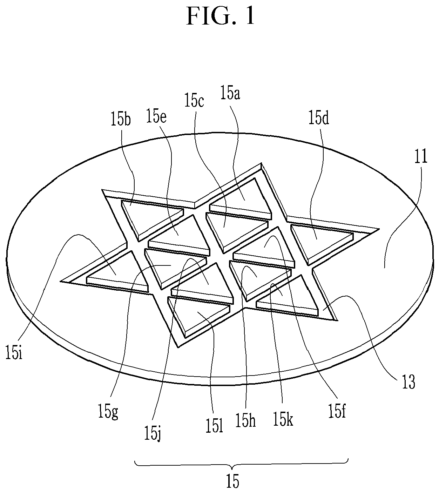

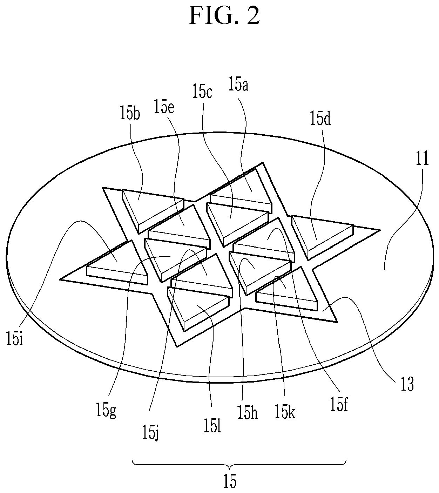

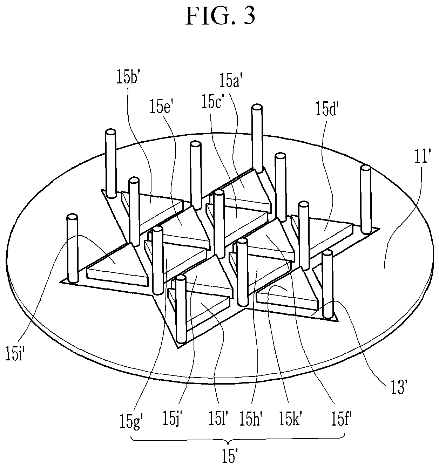

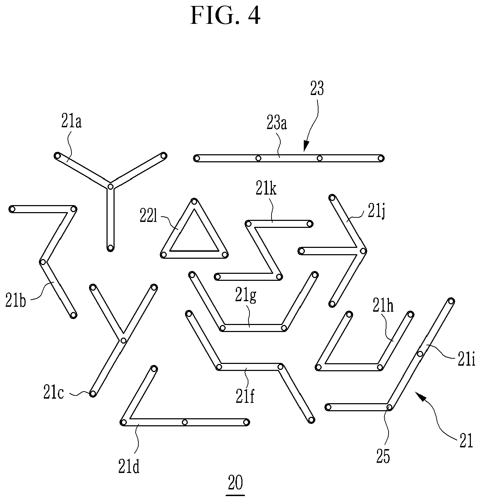

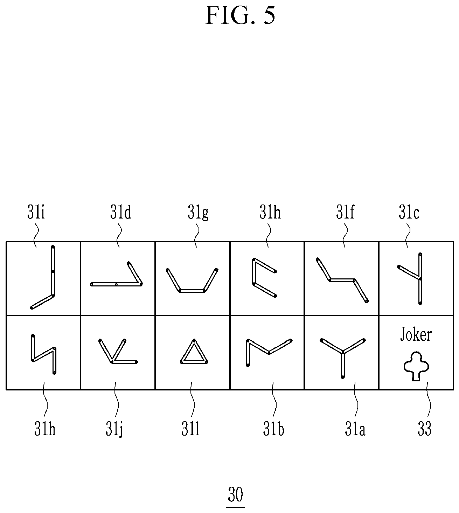

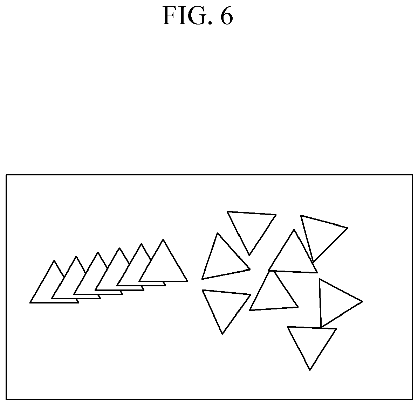

First, as illustrated in FIGS. 1 to 6, a creative figure board game play and learning kit 100 according to an exemplary embodiment of the present invention may include a board game plate 10 on which a plurality of unit figures having predetermined shapes is arranged at predetermined intervals to define a main set of figures, shape piece blocks 20 which are disposed on the board game plate 10 by being rotated, moved, symmetric, and reversed along the plurality of unit figures and connected to one another to define the main set of figures, shape piece block cards 30 on which pictures corresponding to the shape piece blocks 20 are marked, and game chips 40 which are provided to correspond to the number of unit figures that may be obtained by arranging the shape piece blocks 20 in accordance with the shape piece block card 30 selected among the shape piece block cards 30.

In the creative figure board game play and learning kit 100 according to the exemplary embodiment of the present invention, the shape piece blocks 20 may include non-transformable shape piece blocks 21 of which the number correspond to the number of cases made by moving lines having the number for defining the unit figures, and one transformable shape piece block 23 which may be arbitrarily transformed by one of the non-transformable shape piece blocks 21.

In addition, the shape piece block cards 30 may include non-transformable shape piece block cards 31 on which pictures corresponding to the non-transformable shape piece blocks 21 are marked, and a joker card 33 which enables users to select any one non-transformable shape piece block 21, among the non-transformable shape piece blocks 21, corresponding to the transformable shape piece block 23.

As illustrated in FIGS. 1 to 3, the board game plate 10 of the creative figure board game play and learning kit 100 according to the exemplary embodiment of the present invention may include a main body 11 having a predetermined shape such as a circular, rectangular, or square shape, a seating portion 13 which defines the main set of figures in the main body 11, and protruding portions 15 which are disposed in the seating portion 13 and define the plurality of unit figures.

The seating portion 13 may be configured by a rim groove having a predetermined depth with respect to the main body 11, and the protruding portion 15 may be formed in a column shape 15' of which the one-piece cross section is the unit figure or may be formed in a separate bar shape 15" which protrudes at each vertex of the unit figure.

In the creative figure board game play and learning kit 100 according to the exemplary embodiment of the present invention, the main set of figures is formed in a star shape to provide directionality and entertainment, and in a case in which the unit figure is formed in an equilateral triangular shape, the seating portion 13 may be a rim groove that may divide the main set of figures into equilateral triangles which are the unit figures.

The board game plate 10 may be made of wood, formed by injection molding using synthetic resin, or formed by simply using a Styrofoam plate.

Meanwhile, the shape piece block 20 is disposed along at least a part of the seating portion 13 and configured to have at least one side of the protruding portion 15, such that at least one unit figure is defined when at least one shape piece block 20 is coupled.

That is, in the case in which the unit figure is the equilateral triangle, twelve shape piece blocks 20 may be provided to correspond to the number of cases made by three lines for defining the equilateral triangle, and among the twelve shape piece blocks 20, eleven shape piece blocks 20 are configured as non-transformable shape piece blocks 21 a to 21 k, and a non-transformable shape piece block 21l in a case in which three lines are disposed in a line may be used as the transformable shape piece block 23 that may be transformed.

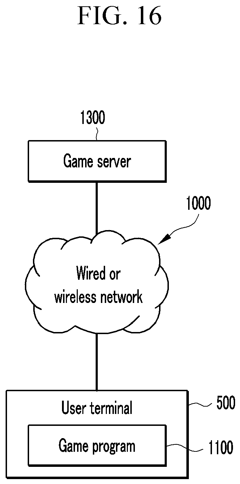

As the shape piece blocks 20 are disposed to be connected to one another by being rotated, moved, and reversed, a sub-set of figures 16 having more unit figures may be formed.

The shape piece blocks 20 may be formed by cutting a plate made of wood, synthetic resin, or the like corresponding to the number of cases, and the shape piece blocks 20 include three linear portions 20a for defining the unit figure, and connecting portions 20b for defining connecting portions among the linear portions 20a.

In the case in which the shape piece block 20 is the non-transformable shape piece block 21, a fitting hole 25 is further formed in the connecting portion 20b, such that the bar-shaped protruding portion 15 may be coupled and fitted into the fitting hole 25.

In the case in which the shape piece block 20 is the transformable shape piece block 23, the shape piece block 20 has a transformable linear portion 23a of which the direction and position may be changed corresponding to the linear portion 20a, and the shape piece block 20 may include a hinged connecting portion 23b that enables the transformable linear portions 23a to be turned corresponding to the connecting portion 20b.

The transformable shape piece block 23 is transformed to have the largest number of unit figures corresponding to the non-transformable shape piece blocks 21 by using the transformable linear portion 23a of which the direction and the position may be changed, thereby forming the sub-set of figures 16.

Here, the main set of figures means a largest figure formed by connecting outermost peripheral seating portions 13, and the sub-set of figures means a figure formed when a first shape piece block 20 is disposed to be in contact with a second shape piece block 20.

Similarly, the shape piece block cards 30 are made of plastic or a paper plate, and may include non-transformable shape piece block cards 31 a to 31l on which figures corresponding to the transformable shape piece block 23 and the non-transformable shape piece blocks 21 a to 21l which have the predetermined number corresponding to the number of cases made by the three lines of the equilateral triangle on one surface are marked, and the joker card 33 which allows the user to select any one non-transformable shape piece block 21 a, among the non-transformable shape piece blocks 21 a to 21l, corresponding to the transformable shape piece block 23.

The game chips 40 are provided corresponding to the number of unit figures formed in the sub-set of figures 16 made by connecting the shape piece blocks 20, and the game chips 40 may be formed by cutting a plate made of plastic, paper, or the like into pieces having shapes of the unit figures.

Two to four or more sets of shape piece blocks 20, shape piece block cards 30, and game chips 40 may be provided to allow 2 to 4 persons to play the game.

In addition, the respective sets may be distinguished by different colors.

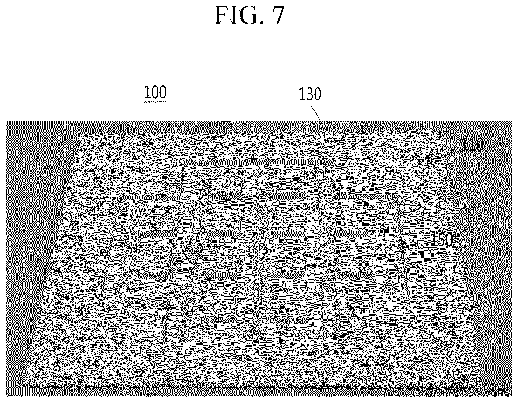

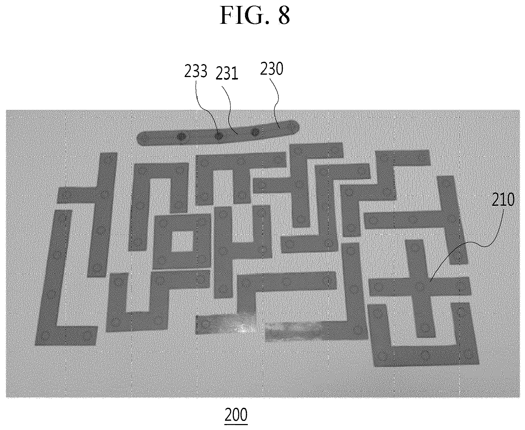

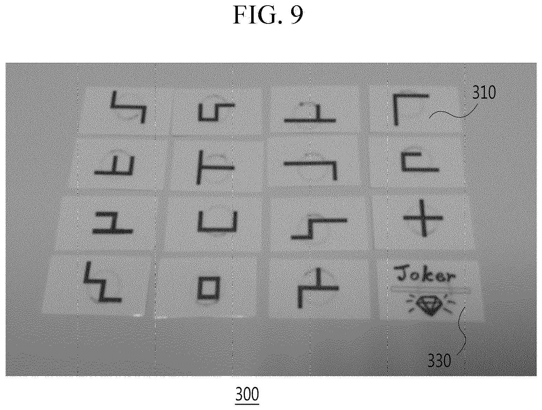

Similarly, as illustrated in FIGS. 7 to 9, in a creative figure board game play and learning kit 200 according to another exemplary embodiment of the present invention, a main set of figures may be configured as a cross-shaped figure to provide directionality, and in this case, the unit figure is a square, and the non-transformable shape piece blocks 210 may include sixteen non-transformable shape piece blocks 210 of which the number corresponds to the number of cases made by four lines for defining the square which is the unit figure, and a transformable shape piece block 230 in which the four lines are arranged in a line may be provided instead of the non-transformable shape piece block 210.

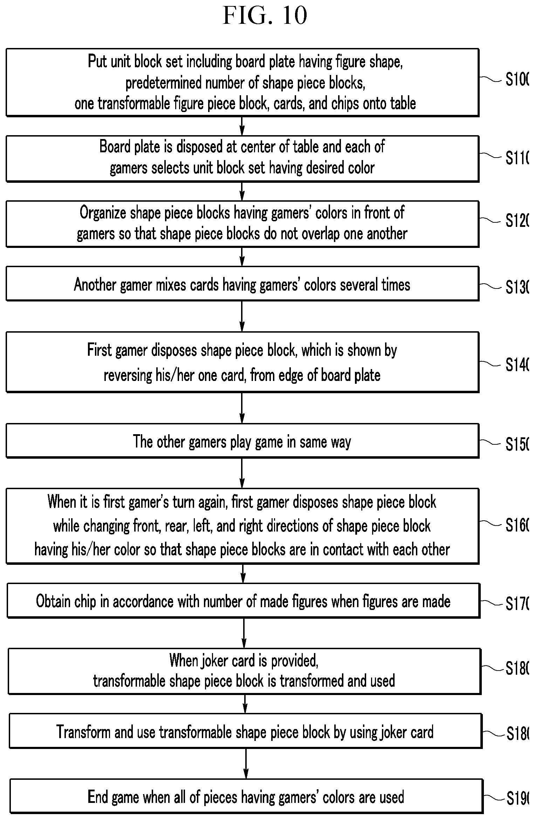

Now, a play and learning method using the creative figure board game play and learning kit according to the exemplary embodiment of the present invention will be described with reference to FIGS. 10 to 14.

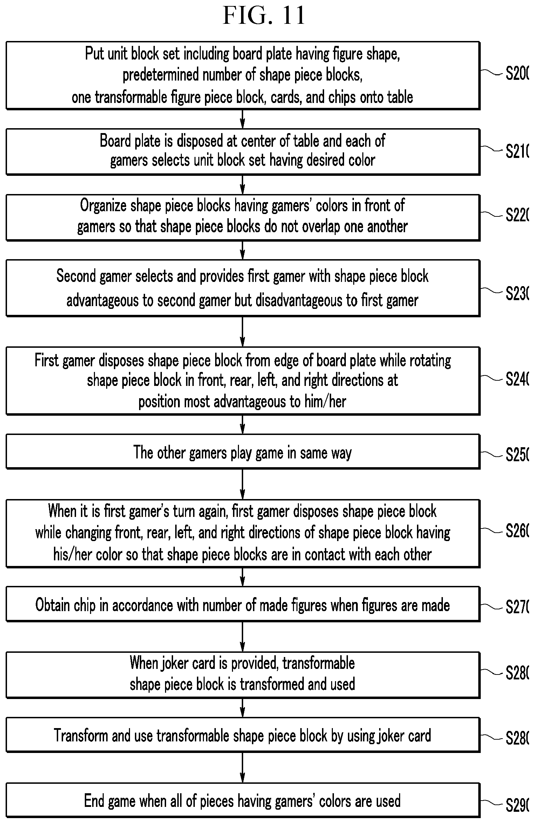

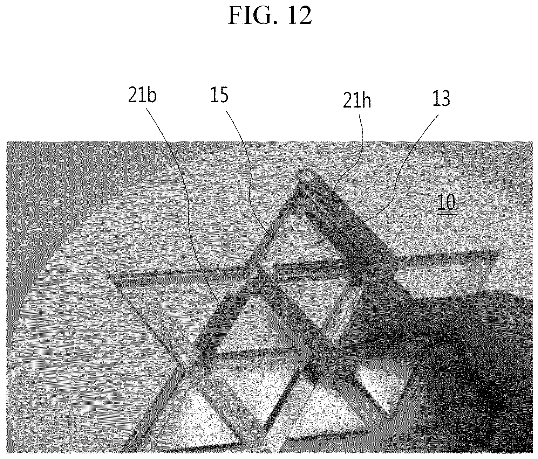

FIG. 10 is a flowchart illustrating a play and learning method using the creative figure board game play and learning kit according to the exemplary embodiment of the present invention, FIG. 11 is a flowchart illustrating a play and learning method using the creative figure board game play and learning kit according to another exemplary embodiment of the present invention, and FIGS. 12 to 14 are views for explaining the play and learning method using the creative figure board game play and learning kit according to the exemplary embodiment of the present invention.

In the play and learning method using the creative figure board game play and learning kit according to the exemplary embodiment of the present invention, first, the sets each including the board game plate 10, the non-transformable shape piece blocks 21, the one transformable shape piece block 33, the shape piece cards 40, and the game chips 40, which are required for the play and learning, are put onto a table to correspond to the number of gamers (S100).

The board game plate 10 is disposed at a center of the table, and each of the gamers selects the set of the shape piece blocks 20, the shape piece cards 30, and the game chips 40 which have desired colors (S110).

Each of the gamers spreads and organizes the shape piece blocks 20 having the selected color in front of him/her so that the shape piece blocks 20 do not overlap one another (S120).

One gamer mixes the shape piece cards 30 of another gamer several times (S130).

A first gamer puts the shape piece block 20 marked on the shape piece block card 30 by reversing his/her one shape block card 30 on the seating portion 13 at an edge of the board game plate 10 (S140).

A next gamer sequentially plays the game in the same way and puts the shape piece block 20 marked on the shape piece block card 30 by reversing his/her one shape block card 30 on the seating portion 13 at an edge of the board game plate 10 at his/her side (S150).

When it is the first gamer's turn again, the first gamer disposes the second non-transformable shape piece blocks 21 a to 21k having his/her color while changing front, rear, left, and right directions of the second non-transformable shape piece blocks 21 a to 21k so that the second non-transformable shape piece blocks 21 a to 21k is in contact with the first non-transformable shape piece blocks 21 a to 21 k disposed previously (S160).

In this case, as illustrated in FIG. 12, for example, the first gamer selects the first shape piece card 31 b on which the first non-transformable shape piece block 21 b is marked, the first gamer disposes the first non-transformable shape piece block 21 b at least partially on the seating portion 13 at the periphery of the first protruding portion 15a disposed at an edge at his/her side among the unit figure column-shaped protruding portions 15, and then disposes the second non-transformable shape piece block 21 h in accordance with the selected shape piece card 31h, and in this case, at least one linear portion 20a should not be overlapped.

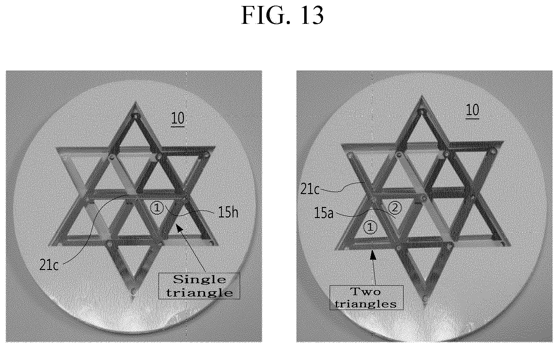

The first gamer disposes the second non-transformable shape piece blocks 21 a to 21k having his/her color while changing the front, rear, left, and right directions of the second non-transformable shape piece blocks 21 a to 21 k so that the second non-transformable shape piece blocks 21 a to 21k are in contact with the first non-transformable shape piece blocks 21 a to 21 k disposed previously, and in this case, the number of unit figures made by the sub-set of figures 16 varies based on a position at which and a direction in which the second non-transformable shape piece block 21 c is placed as illustrated in FIG. 13 even though the same second non-transformable shape piece block 21 c is placed. Further, the gamer obtains the single game chip 40 when the number of unit figures is 1, and obtains the two game chips 40 when the number of unit figures is 2 (S170)

That is, the non-transformable shape piece blocks 21 a to 21 k may be placed while the front, rear, left, and right directions thereof are arbitrarily changed, and the number of produced unit figures may vary based on the direction in which the non-transformable shape piece blocks 21a to 21k are disposed, such that the respective gamers think to place the pieces in directions advantageous to the respective gamers.

Meanwhile, when the joker card 33 is placed, the gamer may use the transformable shape piece block 23 by transforming the transformable shape piece block 23 (S180).

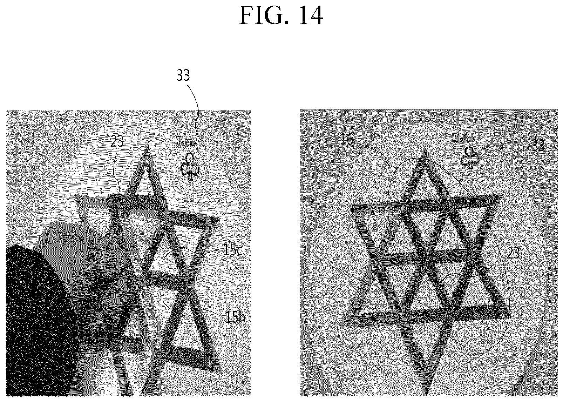

Of course, in some instances, the transformable shape piece block 23 may be strategically used at any time by appropriately determining the timing for using the joker card 33 (S180'). In this case, as illustrated in FIG. 14, the gamer may directly make and use a shape advantageous to him/her, and the gamer may obtain a large number of game chips 40 in accordance with situations.

When the gamers play the game sequentially and all of the gamers use all of the shape piece blocks 20 having their colors, the game ends (S190).

In this case, the winner of the game is a person who has the largest number of unit figures, for example, equilateral triangles and squares, that is, who has the game chips 40 the most.

Meanwhile, as illustrated in FIG. 11, according to the play and learning method using the creative figure board game play and learning kit according to another exemplary embodiment of the present invention, the gamers may strategically play the game that further improves thinking faculty and creativity.

The play and learning method using the creative figure board game play and learning kit according to another exemplary embodiment of the present invention is similar to the play and learning method using the creative figure board game play and learning kit according to the exemplary embodiment of the present invention in that the sets each including the board game plate 10, the non-transformable shape piece blocks 21, the one transformable shape piece block 23, and the game chips 40, which are required for the play and learning, are put onto a table to correspond to the number of gamers (S200), the board game plate 10 is disposed at a center of the table, and each of the gamers selects the set of the shape piece blocks 20, and the game chips 40 which have desired colors (S210), and each of the gamers spreads and organizes the shape piece blocks 20 having the selected color in front of him/her so that the shape piece blocks 20 do not overlap one another (S220).

However, the play and learning method using the creative figure board game play and learning kit according to another exemplary embodiment of the present invention is different from the play and learning method using the creative figure board game play and learning kit according to the exemplary embodiment of the present invention in that the shape piece cards 30 are not used, and the first gamer strategically selects the shape piece block 20 most advantageous to him/her but disadvantageous to the other gamers among the shape piece blocks 20, or another gamer strategically provides the first gamer with the shape piece block 20 advantageous to him/her but disadvantageous to the first gamer among the shape piece blocks 20 (S230).

The first gamer places the shape piece block 20, which is selected by the first gamer or received from another gamer, on the seating portion 13 at the edge of the board game plate 10 while rotating the shape piece block 20 in the front, rear, left, and right directions (S240), and the next gamer sequentially plays the game in the same way (S250), and when it is the first gamer's turn again, the first gamer disposes the second non-transformable shape piece blocks 21 a to 21k having his/her color while changing the front, rear, left, and right directions of the second non-transformable shape piece blocks 21 a to 21 k so that the second non-transformable shape piece blocks 21 a to 21k are in contact with the first non-transformable shape piece blocks 21 a to 21 k disposed previously (S260), and obtains the game chip 40 in accordance with the number of unit figures provided by the sub-set of made figures 16 (S270). When the joker card 33 is selected, the first gamer may transform and use the transformable shape piece block 23 (S280). In addition, the joker card 33 is strategically used at the time most advantageous to the gamer, and the transformable shape piece block 23 may be transformed and used (S280').

Similarly, when the gamers play the game sequentially and all of the gamers use all of the shape piece blocks 20 having their colors, the game ends (S290).

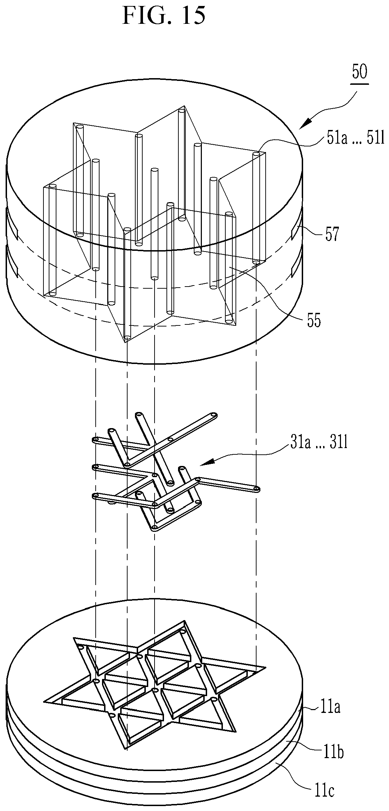

Now, a creative figure board game play and learning kit according to still another exemplary embodiment of the present invention will be described with reference to FIG. 15.

FIG. 15 is a view illustrating a shape piece block organizing lid of the creative figure board game play and learning kit according to another exemplary embodiment of the present invention.

As illustrated in FIG. 15, in the creative figure board game play and learning kit 100 according to another exemplary embodiment of the present invention, the main body 11 of the board game plate 10 may be easily formed by coupling a plurality of main body parts 11 a, 11 b, 11c..., in which a main set of figures having a predetermined shape are opened.

The seating portion 13 having a rim groove shape on which the shape piece block 20 is to be disposed may be easily manufactured in the main body 11 since the main body 11 is made by stacking the plurality of main body parts 11a, 11 b, and 11c.

In addition, an organizing lid 50 for covering the main body 11 may be further provided. In the organizing lid 50, bar-shaped protruding portions 51 are formed to correspond to respective edges of unit figures that constitute the main set of figures, and the organizing lid 50 may be used as a board game plate, and the protruding portions 51 may be organized by being fitted into the fitting holes 25 of the shape piece blocks 20.

Separation protrusions 55 may be further formed on the bar-shaped protruding portions 51 in order to organize the shape piece blocks 20 by color.

In addition, the organizing lid 50 is formed in the form of a stack of boxes, and plate-shaped separation protrusions 57 may be further formed along an inner circumferential portion of the organizing lid 50 at predetermined intervals in a height direction of the guide protrusion 51 in order to organize the set of shape piece blocks by color.

Since the organizing lid 50 is further provided as described above, it is possible to prevent the shape piece blocks 20, which have various shapes and are provided in accordance with the number of gamers, from being lost, to solve a problem with an increase in volume due to the necessity of a separate storage box or a storage housing, and to use the two board game plates in accordance with the number of gamers, which enables the gamers to play the game most entertainingly and interestingly.

Now, a creative figure board game play and learning method according to yet another exemplary embodiment of the present invention will be described with reference to FIGS. 16 to 18.

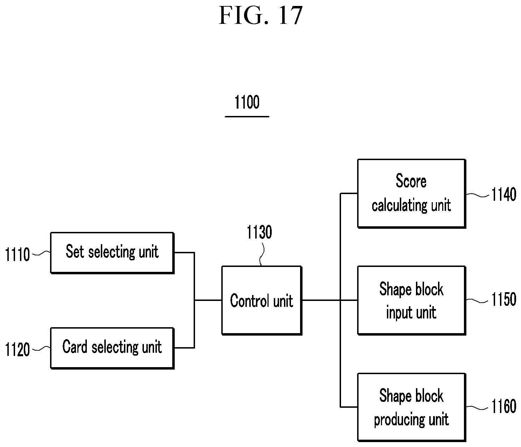

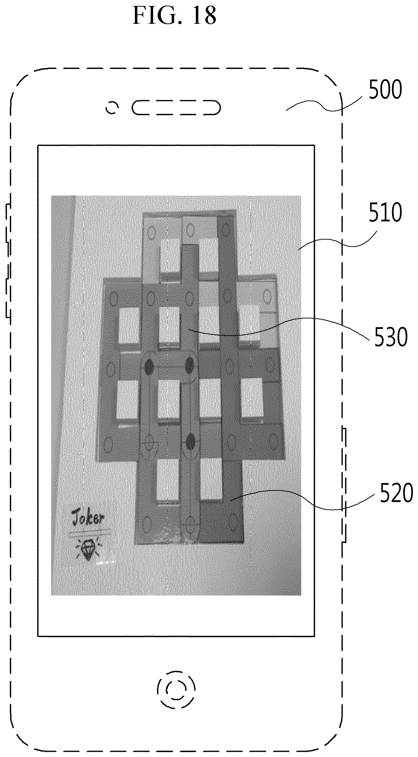

FIGS. 16 and 17 is a block diagram for explaining a creative figure board game system according to yet another exemplary embodiment of the present invention, and FIG. 18 is an exemplified view illustrating a screen provided by the creative figure board game system according to yet another exemplary embodiment of the present invention.

A creative figure board game system 1000 according to yet another exemplary embodiment of the present invention provides a game program 1100 and a user terminal 500 which downloads the game program 1100 and executes a creative figure board game play and learning game, and the creative figure board game system 1000 includes a game server 1300 which mediates a network game.

The user terminal 500 of the present invention is a terminal which downloads the game program through a wired or wireless network and executes the game program, and includes a computer terminal, a mobile communication terminal, and other portable terminals. The user may play the game alone in a local environment, or may play the battle game with another user under control of the game server 1300 in a network environment.

The game server 1300 of the present invention allows users to apply for membership through homepages, and provides installation programs and version programs of the game programs to the users with membership. The user needs to log into the game server 1300 to play the battle game with another user, and may play the game alone without login access in a stand-alone environment.

The game server 1300 may include a board game plate display unit 1160 on which the unit figures are arranged at predetermined intervals in the main set of figures, a game set selecting unit 1110 which selects a set of a shape piece block, a shape piece block card, and a game chip, a shape piece block card selecting unit 1120 which mixes the shape piece block cards and provides the shape piece block cards one by one, a shape piece block input unit 1150 which inputs the shape piece block in accordance with a shape of the shape piece block card selected by a shape piece block card selecting means, a score calculating unit 1140 which counts and displays the number of unit figures made by a sub-set of figures formed by one or more shape piece blocks, and a control unit 1130 which controls the board game plate display unit 1160, the game set selecting unit 1110, the shape piece block card selecting unit 1120, the shape piece block input unit 1150, and the score calculating unit 1140, and the shape piece block input unit 1150 may include a touch unit for detecting a movement of a touch pen or a finger or include functions of providing, moving, rotating, reversing, and selecting the shape piece block.

As illustrated in FIG. 18, the game may be played as the user draws, with the finger, a selected shape piece card 510 or a provided shape piece block 520 at a desired position and in a desired direction on the user terminal 500 in accordance with the creative figure board game play and learning method according to the exemplary embodiment or another exemplary embodiment of the present invention which have been described with reference to FIGS. 10 and 11.

The creative figure board game system may be developed as mobile game applications, which can be easily evolved, by diversifying and miniaturizing the form of the game such as the number of gamers and game strategies, pleasure may be improved by a combination of off-line and on-line and a body activity even online, and reality may be improved when the user draws the shape piece blocks with the finger by using an augmented reality technology, thereby improving an immersion level of the game.

### [Industrial Applicability]

According to the exemplary embodiment of the present invention, it is possible to provide a creative figure game combined with a strategic board game instead of a puzzle type game in which figures are simply fitted together, to enable the entire family to enjoy the figure game, not an infant or a child alone, to provide an opportunity to turn around the game by using the transformable shape piece blocks, and to provide educational games which allow the user to interestingly play the game and are combined with mathematical concepts so as to increase the number of unit figures in the sub-set of figures made by disposing the non-transformable shape piece blocks while changing the directions or the positions of the non-transformable shape piece blocks in the front, rear, left, and right directions.

## Claims

1. A creative figure board game play and learning kit comprising:
a board game plate on which a plurality of unit figures having predetermined shapes is disposed at predetermined intervals to define a main set of figures; and
shape piece blocks which are disposed on the board game plate by being rotated, moved, symmetric, and reversed along an outer circumferential portion of at least one of the unit figures, and connected to one another to define a sub-set of figures that divides a part of the main set of figures,
wherein the shape piece blocks have a single transformable shape piece block which is transformable to correspond to shapes of the remaining shape piece blocks.

2. The creative figure board game play and learning kit of claim 1, wherein:
the plurality of shape piece blocks is provided in accordance with the number of cases made by linear portions having the number for defining the unit figure.

3. The creative figure board game play and learning kit of claim 2, comprising:
shape piece block cards which include non-transformable shape piece block cards on which shapes corresponding to shapes of the shape piece blocks are marked, and a joker card that indicates the transformable shape piece block in accordance with the shape piece block; and
game chips which are provided in accordance with the number of unit figures of the sub-set of figures made as the one or more shape piece blocks are connected.

4. The creative figure board game play and learning kit of claim 1, wherein:
the board game plate includes a main body which has a predetermined shape, unit figure protruding portions which protrude on the main body along the unit figures arranged in the main set of figures, and a seating portion which has a predetermined width along an outer circumferential portion of the unit figure protruding portion and on which the shape piece block is disposed.

5. The creative figure board game play and learning kit of claim 4, wherein:
the unit figure protruding portion is configured by one of a one-piece column-shaped protruding portion which protrudes along a bottom surface of the unit figure and a bar-shaped protruding portion which protrudes at each vertex of the unit figure.

6. The creative figure board game play and learning kit of claim 4, wherein:
the main body has the same height as the unit figure protruding portion, and the seating portion is formed in the form of a rim groove concavely formed between the main body and the unit figure protruding portion.

7. The creative figure board game play and learning kit of claim 1, further comprising:
an organizing lid which is configured to cover the main body and has guide protrusions that protrude downward corresponding to each vertex of the unit figure protruding portion,
wherein the shape piece block has a fitting hole which is formed at a connecting portion of the linear portion and fitted with the guide protrusion, and
the organizing lid has plate-shaped separation protrusions formed along an outer circumferential portion at predetermined intervals in a height direction from the guide protrusion to organize the shape piece blocks by color.

8. The creative figure board game play and learning kit of claim 1, wherein:
the unit figure is any one of an equilateral triangle, a square, and a regular hexagon, the number of shape piece blocks is 12 when the unit figure is the equilateral triangle, and the number of shape piece blocks is 16 when the unit figure is the square.

9. A creative figure board game play and learning method comprising:
providing, in accordance with the number of gamers, figure board game sets each including a board game plate on which unit figures are arranged to have seating portions at predetermined intervals in a main set of figures, shape piece blocks which are to be disposed at predetermined intervals, shape piece block cards on which the shape piece blocks are marked, and game chips;
disposing the board game plate at a center and selecting, by gamers, the figure board game sets having desired colors;
spreading, by the gamers, the board game sets so that the board game sets do not overlap one another;
mixing, by another gamer, the shape piece block cards;
disposing, by a first gamer, a first shape piece block on one shape piece block card selected among his/her shape piece block cards along the seating portion at an edge of the board game plate by rotating, moving, and reversing the first shape piece block;
playing, by a next gamer, the game in the same way;
disposing a second shape piece block by changing front, rear, left, and right directions of the second shape piece block so that the second shape piece block is in contact with the first shape piece block when it is the first gamer's turn again;
obtaining the game chip in accordance with the number of unit figures made by a sub-set of figures formed as the first shape piece block and the second shape piece block are connected; and
ending the game when all of the shape piece blocks are used and the gamer who has the largest number of game chips wins the game.

10. The creative figure board game play and learning method of claim 9, comprising:
making the sub-set of figures by using transformable shape piece blocks which are used by being transformed in shape among the shape piece blocks when a joker card is selected among the shape piece block cards.

11. The creative figure board game play and learning method of claim 9, comprising:
selecting, by the gamer, the shape piece block advantageous to him/her but disadvantageous to the other gamers or providing, by another gamer, the shape piece block advantageous to him/her but disadvantageous to the gamer.

12. A creative figure board game play and learning system comprising:
a user terminal which downloads a program related to the creative figure board game play and learning method according to any one of claims 9 to 11, and executes creative figure board game play and learning; and
a game server which provides the user terminal with the program related to the creative figure board game play and learning method, and mediates and operates in conjunction with the user terminal on a network.

13. The creative figure board game play and learning system of claim 12, comprising:
a board game plate display unit in which the unit figures are arranged at predetermined intervals in the main set of figures;
a game set selecting unit which selects a set of the shape piece block, the shape piece block card, and the game chip;
a shape piece block card selecting unit which mixes the shape piece block cards and provides the shape piece block cards one by one;
a shape piece block input unit which inputs the shape piece block in accordance with a shape on the shape piece block card selected by a shape piece block card selecting means;
a score calculating unit which counts and displays the number of unit figures made by the sub-set of figures formed by at least one shape piece block; and
a control unit which controls the board game plate display unit, the game set selecting unit, the shape piece block card selecting unit, the shape piece block input unit, and the score calculating unit.

14. The creative figure board game play and learning system of claim 13, wherein:
the shape piece block input unit includes a touch unit which detects a movement of a touch pen or a finger or includes functions of providing, moving, rotating, reversing, and selecting the shape piece block.
